# EUROPÄISCHE PATENTSCHRIFT

(11) **EP 2 666 711 B1**
(45) Veröffentlichungstag und Bekanntmachung des Hinweises auf die Patenterteilung: **12.09.2018**
(21) Anmeldenummer: 13159797.3
(22) Anmeldetag: 18.03.2013
(51) Int. Cl.: F16K 31/122, F16K 1/12, B63G 8/22

(54) **Unterseeboot**
Submarine
Submersible

(30) Priorität: 23.05.2012 DE 102012208627
(43) Veröffentlichungstag der Anmeldung: 27.11.2013
(73) Patentinhaber: ThyssenKrupp Marine Systems GmbH, 24143 Kiel (DE)
(72) Erfinder: Bruhn, Dipl.-Ing. Christian, 24768 Rendsburg (DE); Nowoisky, Dipl.-Ing. Adrian, 14552 Nuthetal/OT Saarmund (DE)
(74) Vertreter: thyssenkrupp Intellectual Property GmbH

(56) Entgegenhaltungen:
- EP-A1- 1 645 501
- EP-A2- 2 073 090
- DE-B3-102008 003 982
- DE-U1- 8 608 567

## Beschreibung

Die Erfindung betrifft ein Unterseeboot mit mindestens einer Tauchzelle gemäß dem Oberbegriff des Anspruchs 1. Unterseeboote weisen in der Regel außerhalb ihres Druckkörpers mehrere Tauchzellen auf, die den Unterseebooten die Fähigkeit verleihen, von einer Überwasserschwimmlage in eine Unterwasserschwimmlage abzusinken oder umgekehrt von einer Unterwasserschwimmlage in eine Überwasserschwimmlage aufzusteigen. Zur Einleitung der Tauchfahrt werden diese Tauchzellen mit Wasser geflutet und zum Wiederaufstieg an die Wasseroberfläche mit einem Gas oder Gasgemisch wie Luft ausgeblasen.

In einem kielseitigen Bereich weisen die Tauchzellen jeweils eine, ggf. aber auch mehrere Öffnungen auf, über die Wasser beim Fluten der Tauchzellen in diese einströmen und beim Ausblasen der Tauchzellen ausströmen kann. Als Teil einer Entlüftungseinrichtung für die Tauchzellen sind an den Tauchzellen in einem oberen Bereich weitere Öffnungen ausgebildet, über die in den Tauchzellen befindliches Gas oder Luft beim Fluten der Tauchzellen entweichen kann. Letztgenannte Öffnungen werden von mechanisch betätigten Ventilen verschlossen, die beim Fluten der Tauchzellen jeweils einen Strömungspfad von dem Inneren der Tauchzelle zu dessen Außenumgebung freigeben und diesen Strömungspfad beim Ausblasen der Tauchzelle und bei Überwasserschwimmlage des Unterseeboots verschließen. Da die Tauchzellen außerhalb des Druckkörpers angeordnet sind, können die daran angeordneten Ventile nicht direkt betätigt werden, sondern sind über mechanische Getriebe und Kardanwellen mit in dem Inneren des Druckkörpers angeordneten Betätigungsmitteln wirkungsverbunden. Dies macht die Entlüftungseinrichtungen für die Tauchzellen in konstruktiver, herstellungs- und montagetechnischer Sicht vergleichsweise aufwändig.

Aus EP 1 645 501 A1 ist es bekannt, eine an einer Tauchzelle zum Anblasen der Tauchzelle vorgesehene Öffnung mit einem Ventil zu verschließen, welches fluidisch ansteuerbar ist.

In EP 2 073 090 A2 ist eine Gasventilanordnung beschrieben, welche zum Einstellen und Regeln des Drucks in einem an der Gasventilanordnung angeschlossenen Raum dient. Die Gasventilanordnung weist ein Gehäuse auf, an welchem ein von einem ersten Schließkörper verschlossener Gaseinlass und ein von einem zweiten Schließkörper verschlossener Gasauslass ausgebildet sind. Sowohl der den Gaseinlass verschließende Schließkörper als auch der den Gasauslass verschließende Schließkörper werden von einem gemeinsamen Gasdruckfederelement gesteuert.

DE 10 2008 003 982 B3 ist ein Unterwasserfahrzeug zu entnehmen, welches eine Tauchzelle aufweist, die von einer Kolben-Zylinder-Anordnung gebildet wird. Diese Kolben-Zylinder-Anordnung weist eine geschlossene, gasgefüllte Zylinderkammer auf, die von einem in dem Zylinder beweglich geführten Kolben begrenzt wird. Durch Ansteuerung des Kolbens ist das Volumen der gasgefüllten Zylinderkammer veränderbar.

Vor diesem Hintergrund liegt der Erfindung die Aufgabe zugrunde, ein Unterseeboot zu schaffen, das im Hinblick auf die Konstruktion, Herstellung und Montage der Entlüftungseinrichtungen für die Tauchzellen deutlich vereinfacht ist.

Gelöst wird diese Aufgabe durch ein Unterseeboot mit den in Anspruch 1 angegebenen Merkmalen. Vorteilhafte Weiterbildungen dieses Unterseeboots ergeben sich aus den Unteransprüchen, der nachfolgenden Beschreibung sowie der Zeichnung. Hierbei können gemäß der Erfindung die in den Unteransprüchen angegebenen Merkmale für sich, aber auch in geeigneter Kombination die erfindungsgemäße Lösung gemäß Anspruch 1 weiter ausgestalten, insofern diese Kombinationen innerhalb des durch alle Ansprüche definierten Schutzes bleiben. Das erfindungsgemäße Unterseeboot weist in an sich bekannter Weise mindestens eine Tauchzelle auf, die außerhalb des Druckkörpers des Unterseeboots angeordnet ist. Diese Tauchzelle weist mindestens eine von einem Absperrventil verschlossene Öffnung auf. Diese Öffnung, die typischerweise an einem oberen Bereich der Tauchzelle ausgebildet ist, bildet einen Strömungspfad von dem Inneren der Tauchzelle in die Außenumgebung der Tauchzelle. Über die offene Öffnung kann beim Fluten der Tauchzelle ein in der Tauchzelle befindliches Gas oder Gasgemisch aus der Tauchzelle entweichen.

Die Grundidee der Erfindung ist es, zum Verschließen der an der Tauchzelle ausgebildeten Öffnung ein fluidisch ansteuerbar ausgebildetes Absperrventil zu verwenden, das ein Dichtungskörper aufweist, der mit einer Kolbenstange bewegungsgekoppelt ist, wobei um die Kolbenstange herum eine Hülse angeordnet ist, welche den Ausfahrhub der Kolbenstange begrenzt. Das heißt, es ist ein Absperrventil mit einem Aktor vorgesehen, welcher bei entsprechender Beaufschlagung mit einem Fluid, bei dem es sich um Luft oder eine Flüssigkeit handeln kann, das Absperrventil öffnend oder schließend ansteuert. Hierzu muss das Absperrventil bzw. dessen Aktor lediglich mit einer geeigneten Fluidversorgung leitungsverbunden sein und entsprechende Mittel zur Steuerung der Fluidversorgung des Aktors vorhanden sein. Als Fluidversorgung kann zum Beispiel die in dem Unterseeboot vorhandene Druckluftversorgung oder ein ebenfalls vorhandenes Hydrauliknetz des Unterseeboots verwendet werden. Bedingt durch die Verwendung eines fluidisch ansteuerbaren Absperrventils beschränken sich bei dem erfindungsgemäßen Unterseeboot die Mittel zur Entlüftung der Tauchzelle im Wesentlichen auf das Absperrventil, eine Leitungsverbindung dieses Absperrventils mit einer Fluidversorgung und eine Steuereinrichtung zur Steuerung der Fluidversorgung. Dementsprechend ist die Entlüftungseinrichtung des erfindungsgemäßen Unterseeboots bedeutend einfacher als bei den bislang bekannten Unterseebooten aufgebaut, was sich besonders vorteilhaft auf deren Herstellung und Montage auswirkt.

Grundsätzlich müssen die Tauchzellen eines Unterseeboots jeweils mit mindestens zwei Öffnungen ausgestattet sein, von denen eine zum Fluten der Tauchzelle dienende Öffnung vorzugsweise in einem kielseitigen Bereich der Tauchzelle ausgebildet ist und eine zum Entlüften der Tauchzelle dienende Öffnung zweckmäßigerweise an der Oberseite der Tauchzelle ausgebildet ist. Alle zur Entlüftung der Tauchzelle dienenden Öffnungen der Tauchzelle werden jeweils von einem Absperrventil verschlossen. Zumindest eines dieser Absperrventile, vorzugsweise aber alle Absperrventile sind bei dem erfindungsgemäßen Unterseeboot in der oben beschriebenen Weise fluidisch ansteuerbar ausgebildet.

Das Absperrventil kann sowohl pneumatisch als auch hydraulisch ansteuerbar ausgebildet sein, wobei allerdings gemäß der vorliegenden Erfindung eine hydraulisch ansteuerbare Ausgestaltung vorgesehen wird, da diese größere Stellkräfte zum Stellen des Absperrventils ermöglicht. In diesem Zusammenhang ist erfindungsgemäß vorgesehen, dass ein Dichtungskörper des Absperrventils mit einer Kolbenstange eines Hydraulikzylinders bewegungsgekoppelt ist. Bei dem Absperrventil handelt es sich demzufolge vorzugsweise um ein Hubventil mit einem Aktor, der von einem Hydraulikzylinder gebildet wird. Durch entsprechende Druckbeaufschlagung des Kolbens des Hydraulikzylinders mit einer Hydraulikflüssigkeit wird der Kolben und die daran ausgebildete Kolbenstange, an der der Dichtungskörper des Absperrventils vorzugsweise direkt befestigt ist, derart bewegt, dass der Dichtungskörper einen von der Öffnung der Tauchzelle und dem Absperrventil gebildeten Strömungspfad freigibt und bei entgegengesetzter Bewegung des Kolbens und der Kolbenstange verschließt.

Vorteilhafterweise kann das Absperrventil in Schließrichtung vorgespannt sein. So kann mindestens ein Federelement vorgesehen sein, welches auf den Dichtungskörper des Absperrventils sowohl in der Schließstellung des Absperrventils als auch in der Öffnungsstellung des Schließkörpers eine Federkraft ausübt, die in Schließrichtung des Dichtungskörpers wirkt. Dies ist zum Beispiel dann von Vorteil, wenn dem Aktor des Absperrventils nicht der zum Schließen des Absperrventils und/oder der zum Halten des Dichtungskörpers in der Schließstellung erforderliche Hydraulikdruck zur Verfügung gestellt werden kann. In diesem Fall bewegt und hält das Federelement aufgrund seiner Vorspannung den Schließkörper in seiner Schließstellung. Weiter vorteilhaft kann das vorgespannte Federelement bei geeigneter Auslegung mit verhindern, dass sich das Absperrventil bei einer auf das Unterseeboot wirkenden Schockbeanspruchung unbeabsichtigt öffnet, indem es eine zusätzliche Haltekraft zur Verfügung stellt, die den Dichtungskörper des Absperrventils in seiner Schließstellung hält.

Ein den Aktor des Absperrventils bildender Hydraulikzylinder ist bevorzugt als ein doppelt wirkender Zylinder mit einer ersten, beim Ausfahrhub der Kolbenstange druckbeaufschlagten Zylinderkammer und einer zweiten, beim Einfahrhub der Kolbenstange druckbeaufschlagten Zylinderkammer ausgebildet. Dies ist insofern vorteilhaft, als bei dem Hydraulikzylinder sowohl der Ausfahrhub als auch der Einfahrhub durch Einleitung der Hydraulikflüssigkeit in die entsprechende Zylinderkammer aktiv gesteuert werden können.

Der Hydraulikzylinder ist vorzugsweise derart ausgebildet und/oder angeordnet, dass er den Dichtungskörper beim Ausfahrhub in eine öffnende Stellung bewegt und ihn beim Einfahrhub in die Schließstellung bewegt. Das heißt, bei Fluidbeaufschlagung der ersten Zylinderkammer des Hydraulikzylinders wird das Absperrventil öffnend gestellt und bei Fluidbeaufschlagung der zweiten Zylinderkammer wird das Absperrventil schließend gestellt. Insbesondere bei einer solchen Konstellation ist vorteilhaft in der zweiten Zylinderkammer des Hydraulikzylinders eine Rückstellfeder angeordnet. Diese Rückstellfeder stellt bei nicht vorliegendem oder unzureichendem Hydraulikdruck sicher, dass dann, wenn die Kolbenstange mit dem Dichtungskörper ausgefahren ist und sich in der Öffnungsstellung befindet, durch die Federkraft der Rückstellfeder zurück in die Schließposition des Dichtungskörpers bewegt wird und dort von der Rückstellfeder gehalten wird. Bei der Rückstellfeder handelt es sich vorzugsweise um eine Schraubenfeder, die vorteilhaft um die Kolbenstange herum angeordnet sein kann. Hierbei kann sich die Rückstellfeder an dem Kolben und einem dem Kolben gegenüberliegenden Endstück des Hydraulikzylinders, durch das die Kolbenstange geführt ist, abstützen. Erfindungsgemäß ist um die Kolbenstange herum eine Hülse angeordnet, welche den Ausfahrhub der Kolbenstange begrenzt. In bevorzugter Ausgestaltung weist diese Hülse an einem Ende eine kragenförmige radiale Erweiterung auf, mit der sie vorzugsweise an dem Kolben anliegt. Vorteilhafterweise kann die Hülse in dieser Position von einer um die Kolbenstange und die Hülse herum angeordneten Rückstellfeder gehalten werden, die sich an der von dem Kolben abgewandten Seite der Erweiterung der Hülse abstützt. Bei einer Ausfahrbewegung des Kolbens mit der Kolbenstange kommt das von dem Kolben abgewandte Ende der Hülse an dem dem Kolben gegenüberliegenden Endstück des Hydraulikzylinders zur Anlage und blockiert so jede weitere Ausfahrbewegung des Kolbens mit der Kolbenstange. Der Ausfahrweg der Kolbenstange wird hierdurch geringer als bei Nichtvorhandensein der Hülse. Ziel dieser Verkürzung des Ausfahrweges ist es, die Rückstellfeder vor einer Überbeanspruchung zu schützen.

Zweckmäßigerweise ist das Absperrventil an einer Außenseite der Tauchzelle angeordnet. Zur Befestigung des Absperrventils an der Tauchzelle weist dieses bevorzugt einen Flanschring auf, der an dem Rand einer Öffnung der Tauchzelle aufliegend befestigt ist. Hierbei bildet eine Öffnung des Flanschringes, das heißt ein von dem Flanschring eingefasster Freiraum zusammen mit der an der Tauchzelle ausgebildeten Öffnung einen Strömungspfad von dem Inneren der Tauchzelle zu deren Außenumgebung und umgekehrt.

Vorzugsweise ist der Durchmesser der an dem Flanschring ausgebildeten Öffnung geringer als der Durchmesser der mit dem Absperrventil zu verschließenden Öffnung, sodass ein an die Öffnung des Flanschringes angrenzender Randbereich bezogen auf den Rand, der an der Tauchzelle ausgebildeten Öffnung radial nach innen vorsteht. Dies ermöglicht in einer weiteren vorteilhaften Ausgestaltung, dass die am Rand der Öffnung aufliegende Stirnfläche des Flanschringes einen Ventilsitz des Absperrventils bildet. Das heißt, der am Rand der Öffnung der Tauchzelle in Richtung des Inneren der Öffnung vorstehende ringförmige Bereich der der Tauchzelle zugewandten Stirnseite des Flanschringes bildet eine Anlagefläche für den Dichtungskörper des Absperrventils in dessen Schließstellung. Bei diesem Dichtungskörper handelt es sich bevorzugt um einen Ventilteller, das Absperrventil ist demzufolge vorzugsweise ein Tellerventil.

Um den von dem Flanschring gebildeten Strömungspfad des Absperrventils freizugeben, ist der Dichtungskörper von seiner Schließstellung, in der er an der der Tauchzelle zugewandten Seite des Flanschrings anliegt, von dem Flanschring weg in Richtung des Inneren der Tauchzelle zu bewegen. Ein hierzu verwendeter Hydraulikzylinder ist bevorzugt außerhalb der Tauchzelle angeordnet. Zur Befestigung des Hydraulikzylinders ist an einer von der Tauchzelle abgewandten Seite des Flanschringes eine Halterung für den Hydraulikzylinder ausgebildet. An dieser Halterung ist der Hydraulikzylinder zweckmäßigerweise derart gehalten, dass die Kolbenstange des Hydraulikzylinders, an der der Dichtungskörper des Absperrventils angeordnet ist, in Achsrichtung des Flanschrichtung in Richtung dessen Öffnung weist und im ausgefahrenen Zustand des Kolbens des Hydraulikzylinders durch die Öffnung des Flanschringes hindurch greift. Um eine kompakte Bauform des Absperrventils zur gewährleisten, ragt die Halterung für den Hydraulikzylinder vorteilhafterweise nicht in radialer Richtung über den Außenrand des Flanschringes hinaus.

Nachfolgend ist die Erfindung anhand eines Ausführungsbeispiels näher erläutert. In der Zeichnung zeigt:
- Fig. 1: schematisch vereinfacht ein Absperrventil zum Verschließen einer Öffnung einer Tauchzelle eines Unterseeboots in perspektivisch, teilgeschnittener Ansicht,
- Fig. 2: das Absperrventil nach Fig. 1 in einer Draufsicht, und
- Fig. 3: das Absperrventil nach Fig. 1 in einer Schnittansicht entlang der Schnittlinie II - II in Fig. 2.

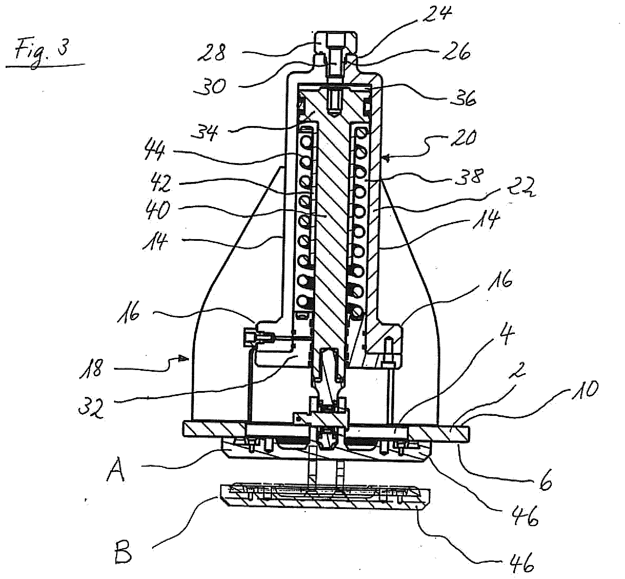

Das in der Zeichnung dargestellte Absperrventil weist einen Flanschring 2 mit einer inneren Öffnung 4 auf. Mit diesem Flanschring 2 ist das Absperrventil an einer in der Zeichnung nicht dargestellten Tauchzelle eines Unterseeboots im Bereich einer an der Tauchzelle ausgebildeten Öffnung befestigt, wobei eine Stirnseite 6 (Fig. 3) des Flanschringes 2 an der Außenseite der Tauchzelle aufliegt. Der Durchmesser der an dem Flanschring ausgebildeten Öffnung 4 ist geringer als der Durchmesser der an der Tauchzelle ausgebildeten Öffnung, sodass der Flanschring 2 mit einem an die Öffnung 4 angrenzenden Ringabschnitt die an der Tauchzelle ausgebildete Öffnung teilweise randseitig überdeckt und mit einem an den äußeren Rand des Flanschringes 2 angrenzenden Ringabschnitt auf der Außenseite der Tauchzelle aufliegt.

An diesem äußeren Ringabschnitt des Flanschringes 2 weist der Flanschring 2 um seinen Umfang gleichmäßig verteilt achtzehn Bohrungen 8 auf. Diese Bohrungen 8 dienen zur Aufnahme von Schrauben, mit denen der Flanschring 2 mit der Tauchzelle verschraubt ist.

An einer von der Stirnseite 6 bzw. von der Tauchzelle abgewandten Stirnseite 10 sind über den Umfang des Flanschringes 2 jeweils in einem Winkel von 120° versetzt drei Halteelemente 12 angeordnet. Diese Halteelemente 12 erstrecken sich in einem an die Stirnseite 10 angrenzenden Abschnitt zunächst normal zu der Stirnseite 10. In einem sich daran anschließenden Abschnitt sind die Halteelemente 12 bogenförmig in Richtung des Zentrums des Flanschrings 2 gebogen, wobei in diesem Abschnitt eine von dem Flanschring 2 beabstandete, normal zur Stirnseite 10 des Flanschringes 2 ausgerichtete Endseite 14 der Halteelemente 12 in dem Lichtraumprofil der Öffnung 4 des Flanschringes 2 angeordnet ist. In Richtung des Flanschringes 2 an die Endseiten 14 der Halteelemente 12 anschließend ist an den Halteelementen 12 jeweils ein Absatz 16 ausgebildet.

Die Halteelemente 12 bilden eine Halterung 18 für einen Hydraulikzylinder 20. Der Hydraulikzylinder 20 weist einen Zylinder 22 auf. An einem von dem Flanschring 2 abgewandten Ende des Zylinders 22 ist ein Vorsprung 24 ausgebildet, durch den eine gestufte Bohrung 26 in das Innere des Zylinders 22 führt. In der Bohrung 26 ist ein Anschlussteil 28 zum Anschluss einer nicht dargestellten hydraulischen Versorgungsleitung eingeschraubt. Das Anschlussteil 28 ist mit einer zentralen Bohrung 30 ausgestattet, über die Hydraulikflüssigkeit von der Versorgungsleitung in das Innere des Zylinders 22 geleitet werden kann.

An einem dem Flanschring 2 zugewandten Ende des Zylinders 22, das offen ausgebildet ist, ist der Zylinder 22 an seiner Außenseite flanschartig erweitert. In dieses offene Ende des Zylinders 22 greift ein Endstück 32 ein. Das Endstück 32 weist an seinem außerhalb des Zylinders 22 befindlichen Ende ebenfalls eine flanschartige Erweiterung auf, die mit der flanschartigen Erweiterung des Zylinders 22 korrespondiert. Im Bereich dieser flanschartigen Erweiterung ist das Endstück 32 mit dem Zylinder 22 verschraubt.

Der Hydraulikzylinder 20 ist umfangseitig mit den Halteelementen 22 im Bereich deren Endseiten 14 verbunden. Dabei stützen sich die flanschartige Erweiterung des Zylinders 22 und die flanschartige Erweiterung des Endstücks 32 an den an den Halteelementen 12 ausgebildeten Absätzen 16 ab.

In dem Zylinder 22 ist ein in Längsrichtung des Zylinders 22 verschiebbarer Kolben 34 angeordnet. Der Kolben 34 teilt den Zylinder 22 in eine erste Zylinderkammer 36 und eine zweite Zylinderkammer 38. Der Zylinder 22 ist als doppelt wirkender Zylinder ausgebildet. Hierzu ist die Zylinderkammer 36 über das Anschlussteil 28 mit einem Hydraulikdruck beaufschlagbar. In einem an die flanschartige Erweiterung angrenzenden Abschnitt ist an dem Zylinder 22 ein aus der Zeichnung nicht ersichtliches zweites Anschlussteil angeordnet, über das Hydraulikflüssigkeit in die zweite Zylinderkammer 38 eingeleitet werden kann. An einer die zweite Zylinderkammer 38 begrenzenden Seite des Kolbens 34 ist eine Kolbenstange 40 ausgebildet. Ein von dem Kolben 34 abgewandter Endabschnitt der Kolbenstange 40 ist durch eine an dem Endstück 32 ausgebildete zentrale Öffnung geführt und ragt dort aus dem Zylinder 22 heraus.

In der zweiten Zylinderkammer 38 ist eine Hülse 42 angeordnet, die die Kolbenstange 40 umgibt und an ihrem dem Kolben 34 zugewandten Ende eine ringförmig nach außen kragende Erweiterung aufweist, mit der die Hülse 42 an dem Kolben 34 anliegt. Des Weiteren ist in der Zylinderkammer 38 eine Schraubenfeder 44 um die Kolbenstange 40 und die Hülse 42 herum angeordnet. Die Schraubenfeder 44 stützt sich mit ihrem dem Kolben 34 zugewandten Ende an der nach außen kragenden Erweiterung der Hülse 42 und mit ihrem davon abgewandten Ende an dem Endstück 32 ab.

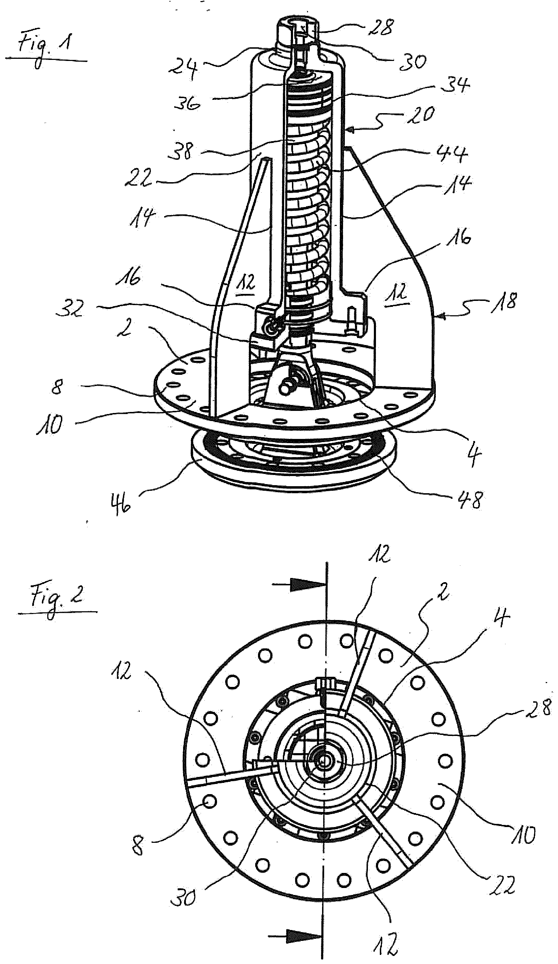

An dem aus dem Zylinder 22 herausragenden Ende der Kolbenstange 40 ist ein Dichtungskörper 46 des Absperrventils befestigt. Bei diesem Dichtungskörper 46 handelt es sich um einen Ventilteller, der in einer Schließstellung des Absperrventils an der Stirnseite 6 des Flanschringes 2 zur Anlage kommt. Ein an der der Stirnseite 6 des Flanschringes 2 zugewandten Seite des Dichtungskörpers 46 angeordneter Dichtring 48 (Fig. 1) dichtet dabei den Dichtungskörper 46 gegenüber dem Flanschring 2 gasdicht ab.

Fig. 3 zeigt den Dichtungskörper 46 sowohl in einer Schließstellung A als auch in einer Öffnungsstellung B. In der Schließstellung A ist die Zylinderkammer 38 des Zylinders 22 mit Hydraulikflüssigkeit druckbeaufschlagt und hält so den Dichtungskörper 46 in der Schließstellung. Des Weiteren ist die in der Zylinderkammer 38 angeordnete Schraubenfeder 44 auf Druck vorgespannt, so dass die Schraubenfeder 44 ebenfalls eine Schließkraft auf den Kolben 34 und damit auf den Dichtungskörper 46 ausübt. Soll der Dichtungskörper 46 in die Öffnungsstellung B bewegt werden, wird Hydraulikflüssigkeit in die Zylinderkammer 36 geleitet und gleichzeitig die in der Zylinderkammer 38 befindliche Hydraulikflüssigkeit aus der Zylinderkammer 38 abgeleitet. Die in die Zylinderkammer 36 einströmende Hydraulikflüssigkeit drückt den Kolben 34 gegen die Federkraft der Schraubenfeder 44, die weiter auf Druck vorgespannt wird, in Richtung des Endstücks 32. Hierdurch löst sich der an der Kolbenstange 40 angeordnete Dichtungskörper 46 von dem von der Stirnseite 6 des Flanschrings 2 gebildeten Ventilsitz. Die Bewegung des Kolbens 34 in Richtung des Endstücks 32 wird dadurch begrenzt, dass das dem Endstück 32 zugewandte Ende der Hülse 42 an dem Endstück 32 zur Anlage kommt, wodurch eine Überlastung der Schraubenfeder 44 verhindert wird. Soll der Dichtungskörper 46 von der Öffnungsstellung B wieder zurück in die Schließstellung A zurückbewegt werden, wird wieder Hydraulikflüssigkeit in die Zylinderkammer 38 eingeleitet und die Hydraulikflüssigkeit aus der Zylinderkammer 36 abgeleitet. Sollte es aufgrund eines Defekts des Hydrauliksystems nicht möglich sein, die Zylinderkammer 38 mit Hydraulikflüssigkeit zu versorgen, drückt die auf Druck vorgespannte Schraubenfeder 44 den Kolben 34 in Einfahrrichtung, bis der Dichtungskörper 46 an der Stirnseite 6 des Flanschrings 2 in der Schließstellung gasdicht zur Anlage kommt. Da die Schraubenfeder 44 auch in der Schließstellung des Dichtungskörpers 46 eine gewisse Vorspannung aufweist, wird der Dichtungskörper 46 von der Schraubenfeder 44 in der Schließstellung gehalten.

### Bezugszeichenliste

- 2: - Flanschring
- 4: - Öffnung
- 6: - Stirnseite
- 8: - Bohrung
- 10: - Stirnseite
- 12: - Halteelement
- 14: - Endseite
- 16: - Absatz
- 18: - Halterung
- 20: - Hydraulikzylinder
- 22: - Zylinder
- 24: - Vorsprung
- 26: - Bohrung
- 28: - Anschlussteil
- 30: - Bohrung
- 32: - Endstück
- 34: - Kolben
- 36: - Zylinderkammer
- 38: - Zylinderkammer
- 40: - Kolbenstange
- 42: - Hülse
- 44: - Schraubenfeder
- 46: - Dichtungskörper
- 48: - Dichtring

- A: - Schließstellung
- B: - Öffnungsstellung

## Patentansprüche

1. Unterseeboot mit mindestens einer Tauchzelle, welche mindestens eine von einem Absperrventil verschlossene Öffnung aufweist, wobei das Absperrventil fluidisch ansteuerbar ausgebildet ist, **dadurch gekennzeichnet, dass** ein Dichtungskörper (46) des Absperrventils mit einer Kolbenstange (40) eines Hydraulikzylinders (20) bewegungsgekoppelt ist und um die Kolbenstange (40) herum eine Hülse (42) angeordnet ist, welche den Ausfahrhub der Kolbenstange (40) begrenzt.

2. Unterseeboot nach Anspruch 1, **dadurch gekennzeichnet, dass** das Absperrventil in Schließrichtung federvorgespannt ist.

3. Unterseeboot nach einem der Ansprüche 1 oder 2, **dadurch gekennzeichnet, dass** der Hydraulikzylinder (20) ein doppeltwirkender Zylinder mit einer ersten, beim Ausfahrhub der Kolbenstange (40) druckbeaufschlagten Zylinderkammer (36) und einer zweiten, beim Einfahrhub der Kolbenstange (40) druckbeaufschlagten Zylinderkammer (38) ist.

4. Unterseeboot nach Anspruch 3, **dadurch gekennzeichnet, dass** in der zweiten Zylinderkammer (38) des Hydraulikzylinders (20) eine Rückstellfeder angeordnet ist.

5. Unterseeboot nach einem der vorangehenden Ansprüche, **dadurch gekennzeichnet, dass** das Absperrventil einen Flanschring (2) aufweist, welcher an dem Rand einer Öffnung der Tauchzelle aufliegend befestigt ist.

6. Unterseeboot nach Anspruch 5, **dadurch gekennzeichnet, dass** die am Rand der Öffnung aufliegende Stirnfläche des Flanschrings (2) einen Ventilsitz bildet.

7. Unterseeboot nach einem der Ansprüche 5 oder 6, **dadurch gekennzeichnet, dass** an einer von der Tauchzelle abgewandten Seite des Flanschrings (2) eine Halterung (18) für den Hydraulikzylinder (20) ausgebildet ist.

## Claims

1. Submarine comprising at least one ballast tank which has at least one opening which can be closed by a shut-off valve, wherein the shut-off valve is designed such that it can be fluidically actuated, **characterized in that** a sealing body (46) of the shut-off valve is coupled in terms of movement to a piston rod (40) of a hydraulic cylinder (20), and **in that** a sleeve (42) is arranged around the piston rod (40), the said sleeve limiting the extension stroke of the piston rod (40).

2. Submarine according to claim 1, **characterized in that** the shut-off valve is spring-prestressed in the closing direction.

3. Submarine according to either of Claims 1 and 2, **characterized in that** the hydraulic cylinder (20) is a double-acting cylinder comprising a first cylinder chamber (36), to which pressure is applied during the extension stroke of the piston rod (40), and a second cylinder chamber (38), to which pressure is applied during the retraction stroke of the piston rod (40).

4. Submarine according to Claim 3, **characterized in that** a return spring is arranged in the second cylinder chamber (38) of the hydraulic cylinder (20).

5. Submarine according to one of the preceding claims, **characterized in that** the shut-off valve has a flange ring (2) which is fastened such that it lies against the edge of an opening of the ballast tank.

6. Submarine according to Claim 5, **characterized in that** that end face of the flange ring (2) which lies against the edge of the opening forms a valve seat.

7. Submarine according to either of Claims 5 and 6, **characterized in that** a holder (18) for the hydraulic cylinder (20) is formed on a side of the flange ring (2) that is averted from the ballast tank.

## Revendications

1. Submersible, comprenant au moins un ballast de plongée, qui présente au moins une ouverture fermée par un clapet antiretour, le clapet antiretour étant réalisé de manière à pouvoir être commandé fluidiquement, **caractérisé en ce qu'**un corps d'étanchéité (46) du clapet antiretour est accouplé de manière déplaçable à une tige de piston (40) d'un cylindre hydraulique (20) et **en ce qu'**une douille (42) est disposée autour de la tige de piston (40), laquelle limite la course de déplacement de la tige de piston (40).

2. Submersible selon la revendication 1, **caractérisé en ce que** le clapet antiretour est précontraint élastiquement dans la direction de fermeture.

3. Submersible selon l'une quelconque des revendications 1 ou 2, **caractérisé en ce que** le cylindre hydraulique (20) est un cylindre à double action avec une première chambre de cylindre (36) sollicitée en pression lors de la course de sortie de la tige de piston (40) et une deuxième chambre de cylindre (38) sollicitée en pression lors de la course de rétraction de la tige de piston (40).

4. Submersible selon la revendication 3, **caractérisé en ce qu'**un ressort de rappel est disposé dans la deuxième chambre de cylindre (38) du cylindre hydraulique (20).

5. Submersible selon l'une quelconque des revendications précédentes, **caractérisé en ce que** le clapet antiretour présente une bride annulaire (2) qui est fixée de manière à s'appliquer contre le bord d'une ouverture du ballast de plongée.

6. Submersible selon la revendication 5, **caractérisé en ce que** la face frontale de la bride annulaire (2) s'appliquant contre le bord de l'ouverture forme un siège de soupape.

7. Submersible selon l'une quelconque des revendications 5 ou 6, **caractérisé en ce qu'**une fixation (18) pour le cylindre hydraulique (20) est réalisée au niveau d'un côté de la bride annulaire (2) opposé au ballast de plongée.
